Europäisches Patentamt

European Patent Office

Office européen des brevets

(11) Numéro de publication : **0 498 720 A1**

# (12) DEMANDE DE BREVET EUROPEEN

(21) Numéro de dépôt : **92400293.4**

(51) Int. Cl.⁵ : **A01N 63/02**

(22) Date de dépôt : **05.02.92**

(30) Priorité : **06.02.91 FR 9101322**

(43) Date de publication de la demande :
**12.08.92 Bulletin 92/33**

(84) Etats contractants désignés :
**CH DE FR GB LI**

(71) Demandeur : **UNIVERSITE DE BRETAGNE OCCIDENTALE, ( BREST)**
**Rue des Archives**
**F-29269 Brest Cédex (FR)**

(72) Inventeur : **Chastel, Claude**
**3 rue Rouget de l'Isle**
**F-29200 Brest (FR)**
Inventeur : **Humphery-Smith, Ian**
**1 rue Saint-Mathieu**
**F-29290 Saint Renan (FR)**
Inventeur : **Le Goff, Francette**
**43 rue du Guelmeur**
**F-29200 Brest (FR)**

(74) Mandataire : **Warcoin, Jacques et al**
**Cabinet Régimbeau 26, avenue Kléber**
**F-75116 Paris (FR)**

(54) **Agent insecticide anti-moustique obtenu à partir de spiroplasma taiwanense.**

(57) La présente invention concerne un agent insecticide caractérisé en ce qu'il comporte au moins un principe actif se trouvant dans le Spiroplasma taiwanense.

L'invention concerne également un procédé destiné à obtenir une souche hypervirulente de spiroplasme, et une composition insecticide permettant la contamination de l'agent insecticide aux larves de moustiques.

EP 0 498 720 A1

La présente invention concerne un agent insecticide anti-moustique, se trouvant notamment dans Spiroplasma taiwanense.

Les moustiques représentent le groupe le plus important des vecteurs de maladie, transmettant aux êtres humains et aux animaux une grande variété d'agents pathogènes.

Les campagnes de lutte contre les grandes endémies tropicales transmises par les moustiques (paludisme, filarioses lymphatiques, dengue hémorragique, et fièvre jaune) ont en grande partie échoué, en raison de la très grande diversité de nature des gîtes larvaires de ces vecteurs, du coût élevé des campagnes d'épendage d'insecticides chimiques puis de surveillance des gîtes traités, de l'apparition de résistances chez les moustiques à ces insecticides, de l'augmentation constante et l'extension de la résistance des agents infectieux (hématozoaires par exemple) aux médicaments disponibles, de l'effet négatif des insecticides chimiques sur la faune non-cible et leur accumulation éventuelle dans la biosphère, et des difficultés rencontrées dans la mise au point de vaccins polyvalents (dengue) ou contre le paludisme.

Ce constat d'échec a conduit plusieurs auteurs à lancer un véritable cri d'alarme en faveur de la recherche de méthodes entièrement nouvelles utilisables dans la lutte contre les maladies transmises par des moustiques (Halstead S.B. Pathogenesis of dengue : challenges to molecular biology, Science, 1988, 239, 476-481 ; Reeves W.C. Concerns about the future of medical entomology in tropical medicine research. Am. J. Trop. Med. Hyg., 1989, 40, 569-570 ; Gubler D.J. Aedes aegypti and Aedes aegypti-borne disease control in the 1990's ; top down or bottom up. Ibid, 571-579). L'examen des problèmes particuliers soulevés par la mise au point d'un vaccin anti-palustre, après tous les espoirs qui avaient été placés en lui, renforce cette impression de pessimisme malheureusement justifié (Miller L.H. Discovery and disease control. AM. J. Trop. Med. Hyg. 1990, 42, 191-195). Parmi les méthodes qui ont été envisagées pour lutter contre les moustiques, les procédés de lutte biologique sont porteurs de grands espoirs qui malheureusement ont du mal à se concrétiser. Dans ce domaine, un seul procédé a connu un certain développement ; il s'agit de l'utilisation d'un agent bactérien pathogène pour les moustiques, B. thuringiensis. Cet agent bactérien, utilisé comme insecticide contre un grand nombre de vecteurs dont Aedes, Anopheles, Culex et Simulium, a donné des résultats intéressants mais limités. Bien que possédant des spores, B. thuringiensis ne se maintient pas pendant de grandes périodes sur les sols où se nourrissent les larves, de plus il sédimente dans l'eau et n'est donc plus accessible, et en fait ne se recycle pas à l'intérieur des populations de moustiques. Des applications répétées sont donc nécessaires, ce qui en fait plus un insecticide passif voisin des composés chimiques qu'un véritable agent de lutte biologique.

Dans le cadre de ces recherches sur le procédé de lutte biologique, les inventeurs se sont intéressé à un groupe de mycoplasmes d'invertébrés susceptibles d'infecter les moustiques et pouvant constituer un agent insecticide intéressant : les spiroplasmes.

Les spiroplasmes font partie du groupe des Mollicutes, et sont largement répandus dans la nature, infectant les plantes, les insectes et les tiques. Les spiroplasmes sont des microorganismes possédant un corps spiralé, dépourvu de membrane, leur permettant de se déformer et de s'infiltrer à travers des membranes d'une certaine porosité.

Trois espèces de spiroplasmes de moustique ont été décrites : S. culicicola, S. sabaudiense et S. taiwanense. Dans la technique antérieure, l'équipe de R.F. Whitcomb et K.J. Hackett (U.S. Dpt of Agriculture, à Beltsville, Maryland) a été intéressée par la lutte biologique dirigée contre les ravageurs de végétaux. Hackett a décrit sommairement deux essais de terrains concernant des coléoptères ravageurs de la pomme de terre aux USA (K.J. Hackett, 1990. Adaptational biology and Spiroplasmas. Zbl. Bakt. Suppl. 20, 21-32). Les deux spiroplasmes (CPBS et DU-I) ont la capacité de diffuser rapidement dans une population de coléoptères et d'envahir l'hémolymphe de ces coléoptères, mais ils n'ont aucun pouvoir de mortalité sur ceux-ci. Un autre groupe, l'équipe de D.A. Carlson de l'U.S.D.A. (Agricultural Research Service, South Atlantic Area, Insects affecting man and animals, Research Laboratory) essaient de cloner le gène de l'hormone oostatique dans Spiroplasma sabaudiense, un spiroplasme non pathogène.

Toutefois, l'utilisation des spiroplasmes dans la lutte contre les moustiques se heurte à un grand nombre de difficultés dont le fait que ces spiroplasmes ne sont pas léthaux pour les moustiques et se comportent chez eux comme de simples commensaux. Toutefois, les recherches ayant conduit à la présente invention ont permis de mettre en évidence les capacités d'un spiroplasme, Spiroplasma taiwanense, comme agent de lutte biologique contre les moustiques (Aedes, Anopheles), vecteurs de grandes endémies. Ce spiroplasme présente en effet des caractéristiques tout à fait intéressantes :

1/ réduit de façon significative la survie des adultes mâles et femelles d'Anopheles Stephensi, un des vecteurs du paludisme, et d'Aedes aegypti le vecteur de la dengue et de la fièvre jaune ;

2/ réduit de façon significative la capacité de vol de ces deux espèces à un point tel que la transmission du paludisme et de la dengue n'est plus possible ;

3/ réduit de façon significative la survie des larves d'Aedes aegypti exposées per os ;

4/ provoque la lyse in vitro des cellules C6/36 d'Aedes albopictus, un autre vecteur de la dengue ;

5/ possède un stade persistant dans son cycle biologique ;

6/ n'apparaît pas comme un pathogène potentiel pour les animaux à sang chaud du fait de son incapacité à se multiplier à 37°C et de son absence de pathogénicité pour le souriceau inoculé par une voie intracérébrale ;

7/ ne semble pas être pathogène pour l'abeille domestique (Apis mellifera) d'après des tests préliminaires réalisés à cet effet ;

8/ possède une capacité reproductrice élevée typique des procaryotes.

De plus, il possède plusieurs avantages par rapport à d'autres procaryotes déjà utilisés dans la lutte biologique anti-moustiques, tout d'abord il peut être aisément congelé, décongelé et lyophilisé, et du fait de sa mobilité, il ne sédimente pas dans l'eau, et il s'agit probablement d'un parasite spécifique des moustiques.

La présente invention concerne donc un agent insecticide caractérisé en ce qu'il contient au moins un principe actif anti-moustique, se trouvant dans Spiroplasma taiwanense.

Spiroplasma taiwanense a été isolé de Culex et sa taxonomie figure en détail dans M.L. Abalain-Colloc et al. (1988, Int. J. Syst. Bacteriol 38:103-107). La souche type a été déposée à l'ATCC sous le n°ATCC 43302.

Le principe actif selon la présente invention peut se présenter sous différentes formes. Il peut s'agir tout d'abord du micro-organisme lui-même, doté de sa capacité de multiplication, pour provoquer une véritable lutte biologique. Mais il peut s'agir d'un principe actif isolé de la souche, notamment une toxine ou produit apparenté. En effet les spiroplasmes dérivent phylogénétiquement de bactéries gram positives, en particulier les Clostridium, qui sont de véritables usines à toxine.

Il est également possible d'utiliser des Spiroplasma tawainense inactifs lorsque seule l'activité du principe actif est requise.

En outre, il est possible de prévoir l'expression de ce principe actif dans un autre organisme afin d'augmenter sa production ; dans ce cas le principe actif pourra provenir d'un organisme différent de S. taiwanense.

Lorsque le principe actif est incorporé dans un organisme vivant, le spiroplasme par exemple, celui-ci peut être conservé sous différentes formes, notamment sous forme lyophilisée.

L'invention concerne également un procédé destiné à obtenir une souche hypervirulente de spiroplasme, et en particulier de Spiroplasma taiwanense, par des passages successifs du micro-organisme dans des cellules compétentes, et notamment des cellules de moustique.

Ce type de culture cellulaire est connue de même que les conditions de repiquage.

Parmi les cultures utilisables, il faut citer les cultures de cellules de moustique, par exemple la lignée C6/36 de A. albopictus, la lignée MOS 61 de A. pseudoscutellaris ou d'autres lignées provenant d'un Aedes aegypti (Peleg. J. Gen. Virology ; 1969, 5, 463) ou d'Aedes malayensis (Varma et al, Tr. Roy, Soc. Trop. Med. Hyg., 1974, 68, 374).

La plupart des espèces de moustique ont un développement asynchronisé, les populations se multipliant pendant de longues périodes à partir des sources d'eau. Pour contrôler les espèces, des traitements hebdomadaires sont nécessaires ainsi que l'emploi de produits et de formulations non résiduels. Cela entraîne des contraintes importantes pour le succès des vecteurs, car le coût de l'application et de l'inspection devient plus élevé que celui des produits eux-mêmes. La formulation est donc très importante et doit pouvoir se recycler ou durer au moins plusieurs semaines. C'est pourquoi la présente invention concerne également des compositions insecticides contenant un agent insecticide tel que décrit précédemment et un support acceptable pour l'application insecticide, notamment un support qui peut maintenir la composition entre deux eaux, ceci afin d'être sous une forme compatible avec les marécages, les eaux stagnantes, lieux où se développent principalement les larves de moustique.

La souche de référence de Spiroplasma taiwanense présente des activités pathogènes qui ont été rappelées précédemment pour mémoire, ces activités peuvent être exacerbées par un procédé mettant en oeuvre des passages multiples de spiroplasmes sur une culture de cellules compétentes notamment des cellules de moustique.

Parmi les formulations courantes rencontrées dans le commerce, on trouve des poudres, des concentrés, des granulés pouvant soit flotter, soit couler dans le cas de sources d'eau peu profondes, ou enfin des briquettes. Suivant le type d'agent insecticide utilisé, la formulation du support pourra varier ; il pourra s'agir d'une formulation de type inerte lorsque seule l'activité de la toxine sera recherchée ; au contraire on pourra utiliser un support type milieu de culture lorsque l'on souhaitera une multiplication du micro-organisme. Il est également possible d'utiliser des supports qui constituent une nourriture pour les larves, par exemple un organisme vivant, ce support pouvant être une algue microscopique, ou une bactérie aquatique des gîtes larvaires. La présence de la toxine dans la nourriture des larves que l'on veut éliminer garantit l'absorption directe de la toxine.

Les exemples ci-après sont destinés à mettre en évidence d'autres avantages et caractéristiques de la présente invention.

Les figures 1 et 2 représentent la réduction de la survie des moustiques a) Aedes aegypti (figure 1) et b) Anopheles stephensi (figure 2) après inoculation intrathoracique de Spiroplasma taiwanense.

La figure 3 représente la réduction de la capacité de vol et de la survie des moustiques adultes femelles Aedes aegypti, induite après inoculation intrathoracique.

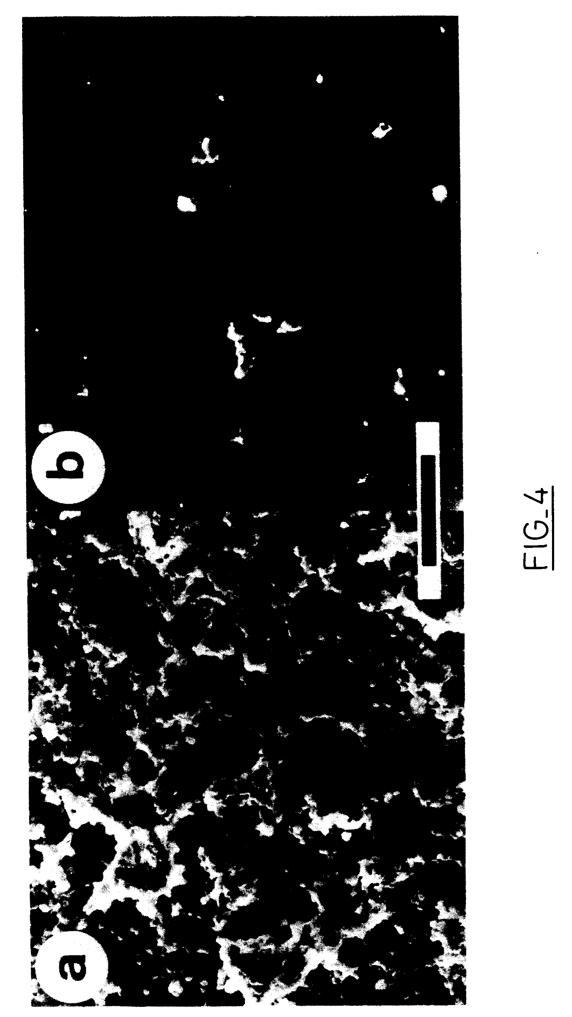

La figure 4 représente une culture de cellules Aedes albopictus C6/36 6 jours après ensemencement a) sans infection b) avec infection par Spiroplasma taiwanense SP2/S1/mut/P9.

Exemple 1

Les cellules C6/36 en lignée continue (ATCC-CRL 1660) sont cultivées à 28°C en milieu de Leibovitz.

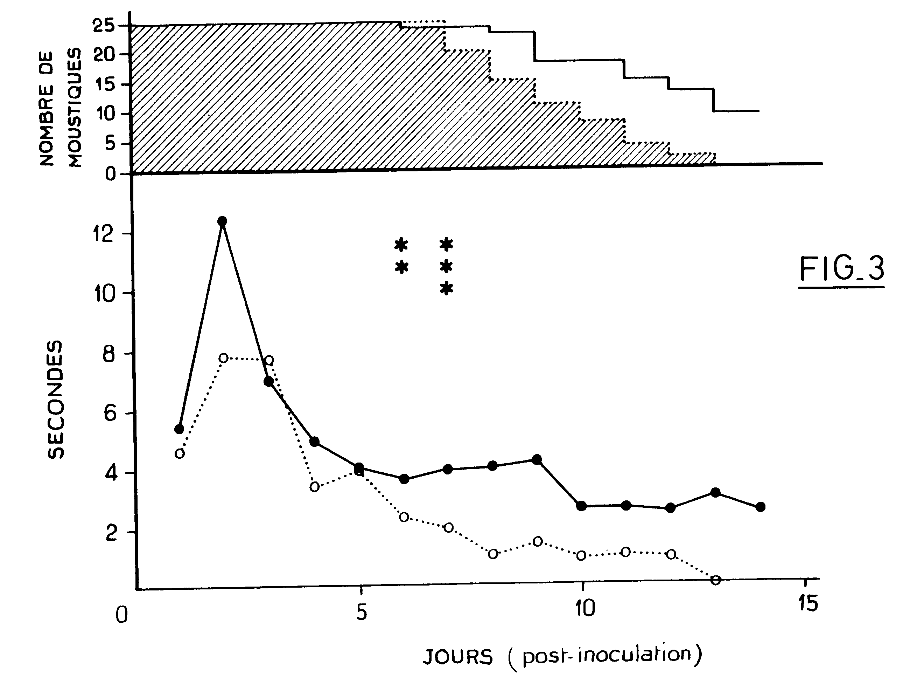

On inocule cette culture avec une souche de Spiroplasma taiwanense, que l'on repique sur la même lignée tous les 2-3 jours. Au bout de 9 passages, on observe un effet cytopathogène très marqué correspondant à l'aspect de la figure 3 b. La souche hypervirulante et fortement cytopathogène ainsi obtenue Sp2/S1/mut/P9 est lyophilisée.

Exemple 2

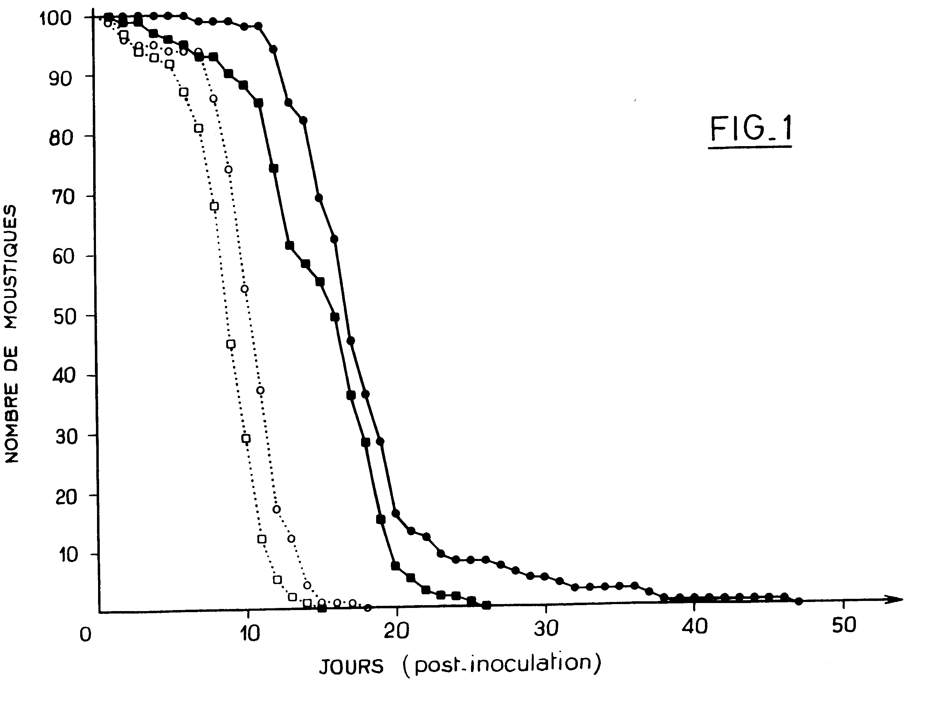

Cet exemple a pour objet de mettre en évidence les caractéristiques de la souche obtenue à l'exemple 1. La figure 1 montre la survie des adultes mâles et femelles de Aedes aegypti après inoculation intrathoracique de la souche de l'exemple 1.

Les contrôles sont en traits pleins, les traités en pointillés (mâles : carré ; femelles : cercle). La réduction de survie est notable et la mortalité totale entre le 5ème et le 10ème jour, ce qui est important pour des espèces qui sont des vecteurs de pathogène nécessitant 8 à 10 jours d'incubation entre la piqure prélevant le pathogène et la réinjection infectieuse.

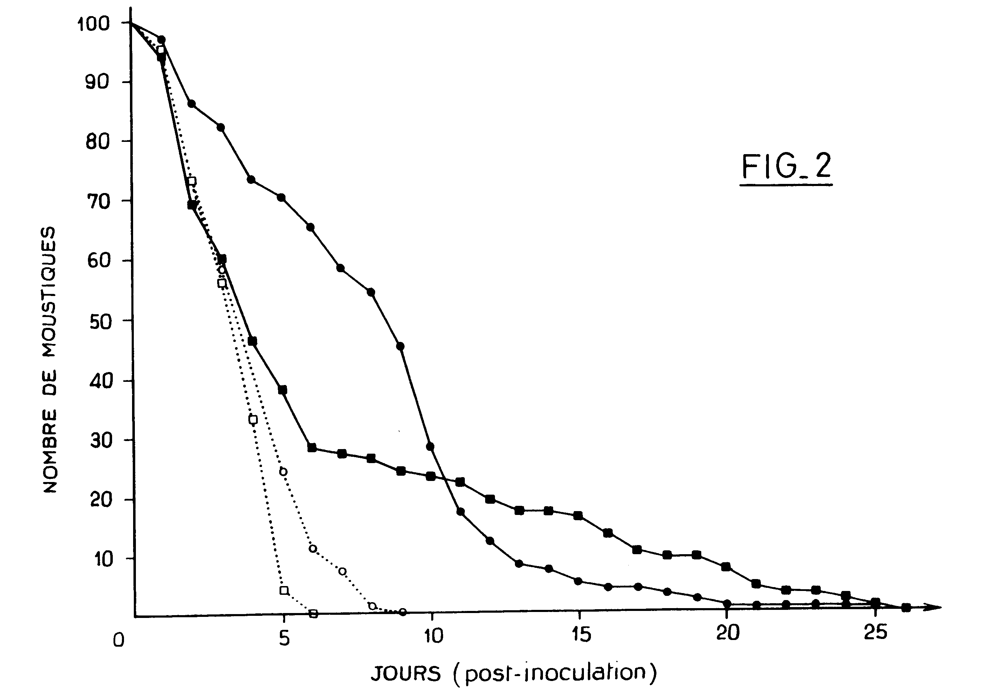

Les résultats sont encore plus caractéristiques chez Anopheles stephensi (figure 2)

Les résultats sur la durée de vol des adultes femelles représentés à la figure 3 sont tout aussi importants. Cette réduction apparaît au 5ème jour, c'est-à-dire avant la fin de la période d'incubation du virus de la Dengue chez A. aegypti, qui est de 11 à 14 jours, et qui est de 7 jours pour la Malaria chez Anopheles. Dans les deux cas, la transmission de la maladie devient très improbable.

**Revendications**

1/ Agent insecticide caractérisé en ce qu'il comporte au moins un principe actif anti-moustique se trouvant dans Spiroplasma taiwanense.

2/ Agent insecticide selon 1, caractérisé en ce que le principe actif est une toxine.

3/ Agent insecticide selon 1 et 2 caractérisé en ce que le principe actif est obtenu par purification à partir d'une culture de Spiroplasma taiwanense.

4/ Agent insecticide selon 1 à 3, caractérisé en ce que Spiroplasma taiwanense est obtenu à partir d'une souche sauvage par passages successifs sur des cultures de cellules de moustique compétentes.

5/ Agent insecticide selon l'une des revendications 1 à 4, caractérisé en ce qu'il est constitué d'une souche de Spiroplasma taiwanense.

6/ Agent insecticide selon l'une des revendications 1 à 5, caractérisé en ce que la souche de Spiroplasma taiwanense est sous forme lyophilisée.

7/ Composition insecticide caractérisée en ce qu'elle comporte à titre d'agent insecticide un agent caractérisé selon les revendications 1 à 6, et un support acceptable pour l'application insecticide.

8/ Composition insecticide selon la revendication 7 caractérisée en ce que le support permet le maintien entre deux eaux de la composition.

9/ Composition insecticide caractérisée en ce que l'agent insecticide est associé à un support qui constitue une nourriture pour les moustiques.

10/ Composition insecticide selon la revendication 9 caractérisée en ce que le support est un organisme vivant.

11/ Procédé de préparation d'un agent insecticide selon l'une des revendications 1 à 6 ou entrant dans une composition insecticide selon l'une des revendications 7 à 10, destiné à obtenir une souche hypervirulente de spiroplasme, caractérisé en ce que l'on effectue à l'aide de la souche dont on souhaite augmenter la virulence au moins trois passages dans au moins une culture de cellules compétentes.

12/ Procédé selon 11, caractérisé en ce que l'on effectue au moins 8 passages dans une culture de cellules compétentes.

13/ Procédé selon 11 à 12, caractérisé en ce que les cellules compétentes sont des cellules de moustique.

14/ Procédé selon 13 caractérisé en ce que les cellules compétentes sont des cellules C6/36 de moustique Aedes albopictus.

15/ Procédé selon 14 caractérisé en ce que les cellules sont cultivées à 28°C en milieu de Leibovitz.

FIG_1

NOMBRE DE MOUSTIQUES

JOURS (post-inoculation)

EP 0 498 720 A1

FIG_2

FIG. 3

EP 0 498 720 A1

FIG_4

**Office européen**
**des brevets**

# RAPPORT DE RECHERCHE EUROPEENNE

Numero de la demande

EP    92 40 0293

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | BIOLOGICAL ABSTRACTS, vol. 85, no. 8, 1988, résumé no. 75272, Philadelphia, PA, US; M.L.ABALAIN-COLLOC et.al.: "Spiroplasma taiwanense, new species from Culex tritaeniorhynchus mosquitoes collected in Taiwan", & INT. J. SYST. BACTERIOL. 38(1): 103-107. 1988 ----- | | A01N63/02 |

DOMAINES TECHNIQUES
RECHERCHES (Int. Cl.5)

A01N

Le présent rapport a été établi pour toutes les revendications

| Lieu de la recherche | Date d'achèvement de la recherche | Examinateur |
|---|---|---|
| LA HAYE | 08 MAI 1992 | DONOVAN T.M. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...........................................................................
& : membre de la même famille, document correspondant

EPO FORM 1503 03.82 (P0402)